# EUROPÄISCHE PATENTSCHRIFT

(11) **EP 2 100 023 B1**
(45) Veröffentlichungstag und Bekanntmachung des Hinweises auf die Patenterteilung: **03.01.2018**
(21) Anmeldenummer: 07819286.1
(22) Anmeldetag: 24.10.2007
(51) Int. Cl.: F02M 26/58

(54) **VENTIL-STEUERVORRICHTUNG**
VALVE CONTROL DEVICE
DISPOSITIF DE COMMANDE DE SOUPAPE

(30) Priorität: 22.12.2006 DE 102006062276
(43) Veröffentlichungstag der Anmeldung: 16.09.2009
(73) Patentinhaber: BorgWarner, Inc., Auburn Hills, MI 48326-2872 (US)
(72) Erfinder: CHRISTMANN, Ralf, 67657 Kaiserslautern (DE)
(74) Vertreter: Peterreins Schley
(86) Internationale Anmeldenummer: PCT/EP2007/009234
(87) Internationale Veröffentlichungsnummer: WO 2008/083770

(56) Entgegenhaltungen:
- EP-A- 0 047 399
- DE-A1- 10 025 877
- FR-A- 1 277 169
- GB-A- 2 068 455
- GB-A- 2 076 940
- US-A- 4 351 285
- US-A- 4 409 945

## Beschreibung

Die Erfindung betrifft eine Ventil-Steuervorrichtung gemäß dem Oberbegriff des Anspruches 1.

Eine derartige Steuervorrichtung ist aus der US 4 409 945 A bekannt. Derartige Steuervorrichtungen, die auch als Steuerdose bezeichnet werden, weisen eine in einem Gehäuse angeordnete Unterdruckkammer auf, die an eine Unterdruckquelle, beispielsweise an die Unterdruckpumpe eines Motors, angeschlossen sind. In dieser Unterdruckkammer ist eine Membran angeordnet, die in eine Richtung durch eine Feder vorgespannt ist. Die Membran trennt die Unterdruckkammer von einer zweiten Druckkammer, die an die Atmosphäre oder eine weitere Unterdruckquelle angeschlossen werden kann. Die Membran ist mit einer Regelstange verbunden, die wiederum das Absperrorgan des Bypassventils betätigt. Hierfür wird in der Unterdruckkammer ein Unterdruck aufgebaut, durch den sich die Membran entgegen der Federkraft verformt und damit die Regelstange bewegt.

Für das Aufbringen großer Kräfte benötigt man jedoch große Membranflächen, da die Höhe des aufzubringenden Unterdrucks begrenzt ist. Dies wiederum bedeutet große Durchmesser der Membranen, was schließlich einen großen Einbauraum bedingt.

Weitere Ventil-Steuervorrichtungen sind aus der EP 0 047 399 A, der US 4 351 285 A, der FR 1 277 169 A, der DE 100 25 877 A1, der GB 2 076 945 A sowie der GB 2 068 455 A bekannt.

Es ist daher Aufgabe der vorliegenden Erfindung, eine Steuervorrichtung der im Oberbegriff des Anspruches 1 angegebenen Art zu schaffen, die es möglich macht, große Kräfte auf die Regelstange aufzubringen und dabei gleichzeitig eine kompakte Bauform ermöglicht.

Die Lösung dieser Aufgabe erfolgt durch die Merkmale des Anspruchs 1.

Die erfindungsgemäße Steuervorrichtung, die aufgrund des Vorsehens zweier Unterdruckkammern auch als "Zweikammerdose" bezeichnet werden kann, ermöglicht die Erhöhung der wirksamen Membranfläche, da aufgrund der erfindungsgemäßen Konstruktion die Membranflächen der beiden Unterdruckkammern addiert werden, da durch den internen Druckausgleich bzw. das Aufbringen von Unterdruck in beiden Unterdruckkammern dieselbe Wirkrichtung für die Verformung der Membran erzielt wird. Hierfür wird das an die eine Unterdruckkammer angelegte Vakuum durch die vorgesehene Strömungsverbindung auch in der anderen Unterdruckkammer erzeugt, deren Membran mit der Regelstange verbunden ist.

Die erfindungsgemäße Steuervorrichtung kann prinzipiell für jegliche Art von Ventilen, insbesondere jedoch zur Ansteuerung von Turbolader-Abgas-Bypassventilen, von Abgas-Rückführventilen und von Ventilen verwendet werden, mit denen Frischluft gesteuert werden kann.

Die Unteransprüche haben vorteilhafte Weiterbildungen der Erfindung zum Inhalt.

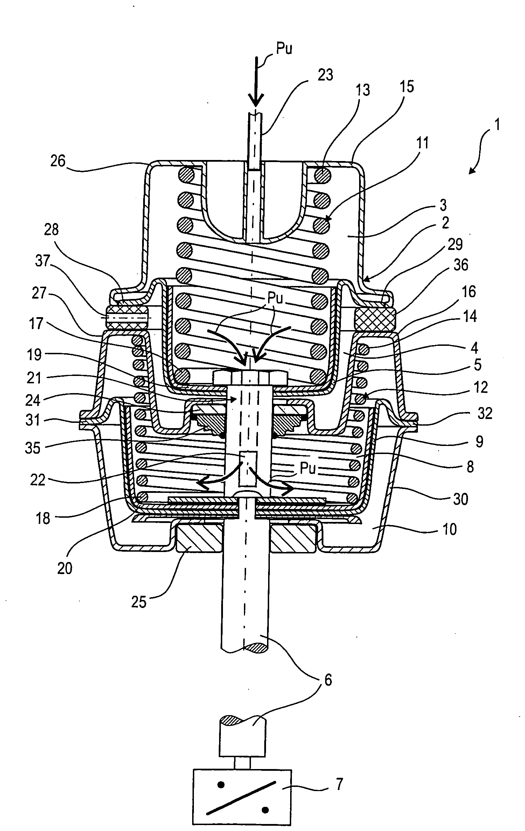

Weitere Einzelheiten, Vorteile und Merkmale der vorliegenden Erfindung ergeben sich aus nachfolgender Beschreibung eines Ausführungsbeispiels anhand der Zeichnung.

Die einzige Figur der Zeichnung zeigt eine schematisch leicht vereinfachte Schnittdarstellung durch eine erfindungsgemäße Steuervorrichtung bzw. Zweikammerdose.

Die erfindungsgemäße Steuervorrichtung 1 dient zur Betätigung von Bypassventilen bzw. der Absperrorgane derartiger Bypassventile, die bei Abgasturboladern Verwendung finden. Das Bypassventil ist in der Figur schematisch als Block 7 verdeutlicht, der mit der Regelstange 6 in Wirkungsverbindung steht, um das Bypassventil zu betätigen. Weitere Einzelheiten des Bypassventils sowie des zugeordneten Abgasturboladers sind jedoch nicht dargestellt, da diese Einzelheiten für die Erläuterung vorliegender Erfindung nicht wichtig sind.

Die Steuervorrichtung 1 weist ein Gehäuse 2 auf, in dem im Beispielsfalle im oberen Teil eine erste Unterdruckkammer 3 angeordnet ist. Die erste Unterdruckkammer 3 wird von einer ersten unter Atmosphärendruck stehenden Druckkammer 4 durch eine federbelastete erste Membran 5 getrennt.

Die erste Unterdruckkammer 3 wird von einem oberen Gehäuseteil 26 und der topfförmig ausgebildeten ersten Membran 5 begrenzt, in die ein ebenfalls topfförmiges Abstützteil 19 eingesetzt ist, auf dem ein - gemäß der gewählten Darstellung - unteres Ende 17 einer Druckfeder 11 aufliegt. Das obere Ende 13 dieser Feder 11 stützt sich an einem zugeordneten Gehäusebereich 15 des oberen Gehäuseteils 26 ab.

Die Atmosphärendruckkammer 4 wird von der Membran 5 und einem unter dem oberen Gehäuseteil 26 liegenden zweiten Gehäuseteil 27 begrenzt, wobei die Membran 5 an ihren freien umfangsseitigen Endbereichen 28 und 29 von diesen beiden Gehäuseteilen 26 und 27 eingeklemmt wird.

Zwischen dem Gehäuseteil 27 und einem weiteren, bei der dargestellten Ausführungsform vorgesehenen und aufgrund der gewählten Darstellung untersten Gehäuseteil 30 ist eine zweite Membran 9 wiederum an ihren umfangsseitigen Endbereichen 31 bzw. 32 fixiert. Diese zweite Membran 9 ist in einer zweiten Unterdruckkammer 8 angeordnet, wobei wiederum ein topfförmiges Abstützteil 20 in die Membran 9 eingesetzt ist, wobei sich eine zweite Druckfeder 12 über Endbereiche 14 bzw. 18 am Gehäuseteil 27 bzw. dem Abstützteil 20 abstützt.

Die Regelstange 6 ist, wie die Figur verdeutlicht, an der unteren Membran 9 fixiert und ferner mit einer Hohlschraube 21 fest verbunden, die bei der dargestellten Ausführungsform ein Beispiel für eine Strömungsverbindung zwischen der ersten Unterdruckkammer 3 und der zweiten Unterdruckkammer 8 darstellt. Diese Hohlschraube 21 weist vor ihrem unteren Ende im Bereich der Unterdruckkammer 8 Strömungsschlitze 22 auf.. Diese Strömungsschlitze bilden eine Verbindung zwischen den beiden Unterdruckkammern 3 und 8, so dass ein durch die Unterdruckquelle PU aufgebrachter Unterdruck in der ersten Unterdruckkammer 3 auch in der zweiten Unterdruckkammer 8 aufgebaut werden kann, was durch die auch in dieser Kammer 8 vorgesehenen Pfeile PU symbolisiert ist. Wie die Figur ferner verdeutlicht, ist die Hohlschraube 21 durch eine Führungsbuchse 24 und die Regelstange 6 durch eine Führungsbuchse 25 axial gleitbeweglich geführt. Die Führungsbuchsen 24 und 25 sind hierfür in Gehäuseabschnitten der Gehäusebereiche 27 bzw. 30 festgelegt.

Die Führungsbuchse 24 weist weiterhin ein Dichtelement 35 auf, das auch unter der Axialbewegung der Hohlschraube 21 die Atmosphärenkammer 4 gegen die Unterdruckkammer 8 gasdicht z.B. mittels eines Membranbalgs abdichtet.

Die Belüftung der Atmosphärendruckkammer 4 kann beispielsweise mittels mindestens einer Öffnung 37 in einem ringförmigen Zwischenteil 36, das unmittelbar am oberen Ende des unteren Gehäuseteils 27 anliegt bzw. mit diesem verbunden oder in diesem integriert ist, durchgeführt werden.

Zusätzlich zur voranstehenden schriftlichen Offenbarung der Erfindung wird hiermit ausdrücklich auf die zeichnerische Darstellung der Erfindung in der beigefügten Figur Bezug genommen.

### Bezugszeichenliste

- 1: Steuervorrichtung
- 2: Gehäuse
- 3: Erste Unterdruckkammer
- 4: Erste Atmosphärendruckkammer
- 5: Erste Membran
- 6: Regelstange
- 7: Bypassventil
- 8: Zweite Unterdruckkammer
- 9: Zweite federbelastete Membran
- 10: Zweite Atmosphärendruckkammer
- 11, 12: Feder
- 13, 14: Ein Ende der Feder 11 bzw. 12
- 15, 16: Gehäusebereiche
- 17, 18: Anderes Ende der Feder 11 bzw. 12
- 19, 20: Abstützteil
- 21: Hohlschraube
- 22: Strömungsschlitze
- 23: Unterdruckleitung
- 24: Gleitbuchse
- 25: Gleitbuchse
- 26: Oberer Gehäuseteil
- 27: Zweites Gehäuseteil
- 28: Endbereich
- 29: Endbereich
- 30: Unterer Gehäuseteil
- 31: Endbereich
- 32: Endbereich
- PU: Unterdruckquelle
- 35: Dichtelement
- 36: Ringförmiges Zwischenteil
- 37: Belüftungsöffnung

## Patentansprüche

1. Ventil-Steuervorrichtung (1)
- mit einem Gehäuse (2), das eine erste Unterdruckkammer (3) und eine erste Atmosphärendruckkammer (4) aufweist, die durch eine federbelastete erste Membran (5) gasdicht voneinander getrennt sind; und
- mit einer Regelstange (6) zur Regelung der Stellung eines Absperrorgans eines Bypassventils (7), wobei die Regelstange (6) mit der ersten Membran (5) in Wirkverbindung steht,
- wobei eine zweite Unterdruckkammer (8) vorgesehen ist, die mit der ersten Unterdruckkammer (3) strömungsverbunden ist, und
- wobei eine zweite federbelastete Membran (9) vorgesehen ist, die in der zweiten Unterdruckkammer (8) angeordnet und die mit der ersten Membran (5) pneumatisch gekoppelt ist, wobei an der zweiten Membran (9) die Regelstange (6) befestigt ist, **dadurch gekennzeichnet,**
- **dass** die Strömungsverbindung zwischen der ersten und zweiten Unterdruckkammer (3, 8) durch eine Hohlschraube (21) erfolgt, die mit der Regelstange (6) fest verbunden ist, wobei die Hohlschraube (21) vorwiegend am unteren Ende im Bereich der Unterdruckkammer (8) Strömungsschlitze (22) aufweist.

2. Steuervorrichtung nach Anspruch 1, **gekennzeichnet durch** eine zweite Atmosphärendruckkammer (10), die **durch** die zweite Membran (9) von der zweiten Unterdruckkammer (8) gasdicht getrennt ist.

3. Steuervorrichtung nach Anspruch 1, **dadurch gekennzeichnet, dass** zwischen der Atmosphärendruckkammer (4) und der Unterdruckkammer (8) ein Dichtelement angeordnet ist.

4. Steuervorrichtung nach Anspruch 1, **dadurch gekennzeichnet, dass** die Belüftung der Atmosphärendruckkammer (4) mittels mindestens einer Öffnung (37) in einem Zwischenteil (36) erfolgt.

5. Steuervorrichtung nach Anspruch 1 bis 4, **dadurch gekennzeichnet, dass** zur Federbelastung der ersten und zweiten Membran (5, 9) jeweils eine Feder (11 bzw. 12), vorzugsweise eine Schraubenfeder, vorgesehen ist, die sich an einem Ende (13 bzw. 14) an einem jeweils zugeordneten Gehäusebereich (15 bzw. 16) und am anderen Ende (17 bzw. 18) an einem auf der jeweiligen Membran (5, 9) angeordneten Abstützteil (19, 20) abstützt.

6. Steuervorrichtung nach einem der Ansprüche 1 bis 5, **dadurch gekennzeichnet, dass** die Durchmesser der Membranen (5, 9) unterschiedlich sind.

7. Steuervorrichtung nach einem der Ansprüche 1 bis 6, **dadurch gekennzeichnet, dass** die Federkräfte der auf die erste bzw. zweite Membran (5, 9) drückenden Feder (11, 12) unterschiedlich groß sind.

8. Turbolader mit einer Ventil-Steuervorrichtung (1) nach einem der Ansprüche 1 bis 7
- mit einer Turbine, die einen Bypass mit einem Bypassventil (7) aufweist.

## Claims

1. Valve control device (1)
- having a housing (2) which has a first vacuum chamber (3) and a first atmospheric pressure chamber (4), which first vacuum chamber (3) and first atmospheric pressure chamber (4) are separated from one another in a gas-tight fashion by a spring-loaded first diaphragm (5); and
- having a regulating rod (6) for regulating the position of a shut-off element of a bypass valve (7), with the regulating rod (6) being operatively connected to the first diaphragm (5),
- with a second vacuum chamber (8) being provided which is flow-connected to the first vacuum chamber (3), and
- with a second spring-loaded diaphragm (9) being provided which is arranged in the second vacuum chamber (8) and which is coupled pneumatically to the first diaphragm (5), with the regulating rod (6) being fastened to the second diaphragm (9),
**characterized**
- **in that** the flow connection between the first and second vacuum chambers (3, 8) takes place by means of a hollow screw (21) which is securely connected to the regulating rod (6), with the hollow screw (21) having flow slots (22) predominantly at the lower end in the region of the vacuum chamber (8).

2. Control device according to Claim 1, **characterized by** a second atmospheric pressure chamber (10) which is separated from the second vacuum chamber (8) in a gas-tight fashion by the second diaphragm (9).

3. Control device according to Claim 1, **characterized in that** a sealing element is arranged between the atmospheric pressure chamber (4) and the vacuum chamber (8).

4. Control device according to Claim 1, **characterized in that** the ventilation of the atmospheric pressure chamber (4) takes place by means of at least one opening (37) in an intermediate part (36).

5. Control device according to Claims 1 to 4, **characterized in that** in each case one spring (11 and 12), preferably a coil spring, is provided for the spring-loading of the first and second diaphragms (5, 9) respectively, which spring (11 and 12 respectively) is supported at one end (13 and 14 respectively) on a respectively assigned housing region (15 and 16 respectively) and at the other end (17 and 18 respectively) on a support part (19, 20) which is arranged on the respective diaphragm (5, 9).

6. Control device according to one of Claims 1 to 5, **characterized in that** the diameters of the diaphragms (5, 9) are different.

7. Control device according to one of Claims 1 to 6, **characterized in that** the spring forces of the springs (11, 12) which press against the first and second diaphragms (5, 9) respectively are of different sizes.

8. Turbocharger having a valve control device (1) according to one of Claims 1 to 7,
- having a turbine which has a bypass with a bypass valve (7).

## Revendications

1. Dispositif de commande de soupape (1),
- avec un boîtier (2), qui présente une première chambre sous dépression (3) et une première chambre à la pression atmosphérique (4), qui sont séparées l'une de l'autre de façon étanche au gaz au moyen d'une première membrane à ressort (5); et
- avec une tige de réglage (6) pour la régulation de la position d'un organe d'arrêt d'une soupape de dérivation (7), dans lequel la tige de réglage (6) est en liaison active avec la première membrane (5),
- dans lequel il est prévu une seconde chambre sous dépression (8), qui est en liaison d'écoulement avec la première chambre sous dépression (3), et
- dans lequel il est prévu une seconde membrane à ressort (9), qui est disposée dans la seconde chambre sous dépression (8) et qui est pneumatiquement couplée à la première membrane (5), dans lequel la tige de réglage (6) est fixée à la seconde membrane (9),
**caractérisé en ce que** la liaison d'écoulement entre la première et la seconde chambres sous dépression (3, 8) est réalisée au moyen d'une vis creuse (21), qui est fixée sur la tige de réglage (6), dans lequel la vis creuse (21) présente des fentes d'écoulement (22) principalement à l'extrémité inférieure dans la région de la chambre sous dépression (8).

2. Dispositif de commande selon la revendication 1, **caractérisé par** une seconde chambre à la pression atmosphérique (10), qui est séparée de la seconde chambre sous dépression (8) de façon étanche au gaz au moyen de la seconde membrane (9).

3. Dispositif de commande selon la revendication 1, **caractérisé en ce qu'**un élément d'étanchéité est disposé entre la chambre à la pression atmosphérique (4) et la chambre sous dépression (8).

4. Dispositif de commande selon la revendication 1, **caractérisé en ce que** la ventilation de la chambre à la pression atmosphérique (4) est effectuée au moyen d'au moins une ouverture (37) dans une pièce intermédiaire (36).

5. Dispositif de commande selon une revendication 1 à 4, **caractérisé en ce qu'**il est respectivement prévu pour la charge élastique de la première et de la seconde membranes (5, 9) un ressort (11 ou 12), de préférence un ressort hélicoïdal, qui s'appuie par une extrémité (13 ou 14) sur une région de boîtier (15 ou 16) respectivement associée et par l'autre extrémité (17 ou 18) sur une pièce d'appui (19, 20) disposée sur la membrane respective (5, 9).

6. Dispositif de commande selon l'une quelconque des revendications 1 à 5, **caractérisé en ce que** les diamètres des membranes (5, 9) sont différents.

7. Dispositif de commande selon l'une quelconque des revendications 1 à 6, **caractérisé en ce que** les forces de ressort du ressort (11, 12) poussant sur la première ou la seconde membrane (5, 9) sont de valeur différente.

8. Turbocompresseur avec un dispositif de commande de soupape (1) selon l'une quelconque des revendications 1 à 7, avec une turbine, qui présente une dérivation avec une soupape de dérivation (7).
